(19) Europäisches Patentamt
European Patent Office
Office européen des brevets

(11) Veröffentlichungsnummer: **0 280 010**
**A1**

# (12) EUROPÄISCHE PATENTANMELDUNG

(21) Anmeldenummer: **88100277.8**

(51) Int. Cl.⁴: **C01C 1/18**

(22) Anmeldetag: **12.01.88**

(30) Priorität: **27.02.87 DE 3706329**

(43) Veröffentlichungstag der Anmeldung: **31.08.88 Patentblatt 88/35**

(84) Benannte Vertragsstaaten: **BE DE ES FR GB NL**

(71) Anmelder: **Uhde GmbH**
**Friedrich-Uhde-Strasse 15 Postfach 262**
**D-4600 Dortmund 1(DE)**

(72) Erfinder: **Nebel, Robert, Dipl.-Ing.**
**Brandenburger Strasse 16**
**D-5860 Iserlohn 9(DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1(DE)**

## (54) Verfahren und Anlage zur Entfernung von Ammonnitrat und/oder Salpetersäure aus Brüden einer Ammonnitratanlage.

(57) Mit einem Verfahren und einer Anlage zur Entfernung von Ammonnitrat und/oder Salpetersäure aus Brüden einer Ammonnitratanlage, soll erreicht werden, daß sowohl das Ammonnitrat als auch die Salpetersäure weitestgehend mit einfachen Mitteln aus den Brüden entfernbar sind, wobei gleichzeitig das entstehende Produkt dem Nährstoffbedarf der zu düngenden Pflanzen besser Rechnung tragen soll.

Verfahrensmäßig wird dies dadurch erreicht, daß die Reinigung der sauren Brüden mehrstufig erfolgt mit wenigstens einer Wasserwaschstufe und einer nachfolgenden Behandlungsstufe zur chemischen Bindung von Salpetersäure, wobei eine entsprechende Anlage sich dadurch auszeichnet, daß eine Waschstufe (7) zum Waschen der Brüden mit reinem Prozeßwasser, einer nachfolgenden Behandlungsstufe (8) mit einer alkalischen Lösung sowie einer nachgeschalteten Fang-bzw. Waschstufe (9) zur Entfernung insbesondere kleinerer Flüssigkeitstropfen aus den Brüden.

EP 0 280 010 A1

# "Verfahren und Anlage zur Entfernung von Ammonnitrat und/oder Salpetersäure aus Brüden einer Ammonnitratanlage"

Die Erfindung richtet sich auf ein Verfahren und eine Anlage zur Entfernung von Ammonnitrat und/oder Salpetersäure aus Brüden einer Ammonnitratanlage.

Während der Herstellung von Ammonnitrat durch Neutralisation von wässriger Salpetersäure in einer Konzentration von 50 - 65 % und gasförmigem Ammoniak entstehen größere Mengen von Brüden. So fallen beispielsweise in einer 1000 tato Ammonnitrat-Neutralisierung bei einem Druck von 4 bar abs. und einer Temperatur von etwa 180 °C ungefähr 20.000 kg/h Brüden an, bei dem Einsatz einer Salpetersäure von 60 %. Wird eine derartige Neutralisation mit einem Überschuß an Salpetersäure, d.h. sauer gefahren so enthalten die Brüden neben Ammonnitrattropfen auch freie Salpetersäure.

Aufgabe der Erfindung ist die Schaffung eines Verfahrens sowie einer Anlage, mit der sowohl das Ammonnitrat als auch die Salpetersäure weitestgehend aus den Brüden entfernt werden und wobei gleichzeitig das entstehende Produkt dem Nährstoffbedarf der zu düngenden Pflanzen besser Rechnung trägt.

Mit einem Verfahren der eingangs bezeichneten Art wird diese Aufgabe gemäß der Erfindung dadurch gelöst, daß die Reinigung der sauren Brüden mehrstufig erfolgt mit wenigstens einer Wasserwaschstufe und einer nachfolgenden Behandlungsstufe zur chemischen Bindung von Salpetersäure.

Es hat sich gezeigt, daß eine derartige Behandlung zu optimalen Ergebnissen führt. So sorgt die vorgeschaltete Waschstufe mit Wasser dazu, daß bereits das Ammonnitrat und die überwiegenden Teile der Salpetersäure zurückgehalten werden. Die die erste Waschstufe verlassende Salpetersäure wird dann in der zweiten Stufe entfernt.

Dabei macht sich die Erfindung die Erkenntnis zunutze, daß bei niedrigen Neutralisationsdrücken im Vakuumbereich, z.B. von 0,15 bis maximal 1 bar abs. in der Brüdenbehandlungsanlage Temperaturen herrschen, bei denen stark verdünnte Salpetersäure einen sehr geringen Dampfdruck hat. In einer solchen Situation reicht häufig die Behandlung der Brüden mit sauberem Kondensat.

Anders verhält es sich aber bei höheren Neutralisationsdrücken, da sich hier Temperaturen einstellen, bei denen auch stark verdünnte Salpetersäure, z.B. 0,5 - 15 %ige Salpetersäure einen merklichen Dampfdruck aufweisen. Hier wird durch die Erfindung dann in der zweiten Stufe die Salpetersäure gebunden, so daß der Partialdruck der Säure so stark abgesenkt wird, daß in der weiteren Gasphase der Brüden keine Salpetersäure mehr vorhanden ist.

In Ausgestaltung sieht die Erfindung vor, daß in der ersten Waschstufe als Waschflüssigkeit sauberes Prozeßwasser und in der zweiten Stufe zur chemischen Bindung pflanzenverträgliches Alkali, wie beispielsweise NaOH, KOH, MgO oder CaO, eingesetzt wird.

Wie oben bereits erwähnt, sorgt die Zugabe z.B. von NaOH, KOH o. dgl. dafür, daß die Salpetersäure gebunden wird.

In weiterer Ausgestaltung ist vorgesehen, daß der chemischen Behandlungsstufe eine weitere Waschstufe mit sauberem Prozeßwasser nachgeschaltet wird, wobei hier insbesondere auch vorgesehen sein kann, daß die abgezogene Waschflüssigkeit dieser dritten Stufe der ersten Stufe als Waschflüssigkeit aufgegeben wird, wodurch sich eine besonders wirtschaftliche Prozeßführung ergibt.

Das erfindungsgemäße Verfahren zeichnet sich auch noch dadurch aus, daß zur Erzeugung der alkalischen Lösung zum Einsatz in der zweiten Stufe eine mit sauberem Prozeßwasser beaufschlagte Ansetzstation eingesetzt wird, wobei hier in zusätzlicher Ausgestaltung vorgesehen sein kann, daß aus der Ansetzstation unlösliche Inertstoffe abgefiltert werden.

Die Erfindung sieht zur Lösung der eingangs genannten Aufgabe auch eine Anlage vor, die durch eine Waschstufe zum Waschen der Brüden mit reinem Prozeßwasser, einer nachfolgenden Behandlungsstufe mit einer alkalischen Lösung sowie einer nachgeschalteten Fang-bzw. Waschstufe zur Entfernung insbesondere kleinerer Flüssigkeitsstropfen aus den Brüden gekennzeichnet ist.

In weiterer Ausgestaltung zeichnet sich diese Anlage dadurch aus, daß der dritten Stufe eine Kondensationseinheit nachgeschaltet ist.

Zweckmäßig kann es sein, wenn eine Ansetzstation zur Erzeugung einer alkalischen Lösung aus aufgegebenen Alkalis und sauberem Prozeßwasser vorgesehen ist, auch dies ist Gegenstand der Erfindung.

Die Anlage hat den besonderen Vorteil, daß die Anzahl der benötigten Böden stark verringert wird, die Produkte haben eine hohe Stabilität, gleichzeitig kommt es zu erheblichen Einsparungen.

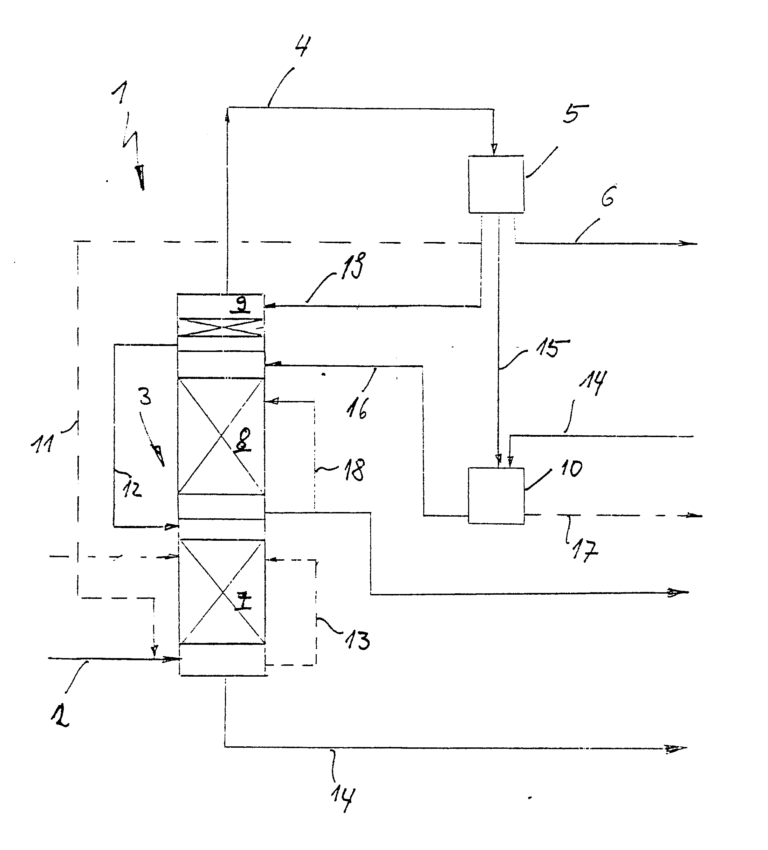

Die Erfindung ist nachstehend anhand der Zeichnung beispielsweise näher erläutert. Diese zeigt ein Prozeßschaubild einer erfindungsgemäßen Anlage.

Bei der allgemein mit 1 bezeichneten Anlage zur Entfernung von Ammonnitrat und/oder Salpetersäure werden über eine Leitung 2 die mit $NH_4NO_3$ und $HNO_3$ verunreinigten Brüden einem Wäscher 3 zugeführt. Die gereinigten Brüden werden über eine Leitung 4 in einer Kondensationseinheit 5 kondensiert und das erzeugte saubere Prozeßkondensat wird in die Leitung 6 abgezogen.

Erkennbar besteht der Wäscher 3 aus drei Waschstufen, nämlich in der dargestellten Art und Weise aus einer unteren Waschstufe 7, einer mittleren Waschstufe 8 zur chemischen Behandlung der Brüden und einer nachfolgenden Waschstufe 9.

Eine sogenannte Ansetzstation 10 zum Vorbereiten einer alkalischen Lösung ist im Prozeß neben weiteren nicht näher dargestellten Steuerungsteilen und dgl. ebenfalls vorgesehen, wobei im folgenden die einzelnen Leitungen noch weiter beziffert sind.

Die Verfahrensweise ist dabei die folgende:
Über die Leitung 2 werden die mit $NH_4NO_3$ und $HNO_3$ verunreinigten Brüden der ersten Waschstufe 7 zugeführt, die mit mehreren Austauschböden bestückt ist. Sollten dabei die Brüden stark überhitzt sein, so ist es möglich, diese durch Einspritzung von sauberem Prozeßkondensat aus dem Kondensator über die Leitung 11 vorzukühlen. Die Brüden werden nun in der ersten Waschstufe 7 im Gegenstrom mit dem Ablauf aus der dritten Stufe 9 gewaschen, die entsprechende Leitung ist mit 12 bezeichnet.

Vorgesehen ist noch eine gestrichelt wiedergegebene Umwälzleitung 13, über die ein Teil der Flüssigkeit umgewälzt werden kann, so daß wenigstens ein Teil der Böden mit einer höheren Flüssigkeitsbelastung betrieben werden kann. Der Waschstrom 12 aus der dritten Waschstufe 9 wird so eingestellt, daß sich im Sumpf der ersten Waschstufe 7 eine Konzentration von 1 - 30 % einstellt, wobei das stark verunreinigte Prozeßkondensat über die Leitung 14 zurück in die $NH_4NO_3$-Neutralisationsstufe gegeben werden kann oder z.B. als Prozeßwasser anderen Prozeßanlagen, wie z.B. der Salpetersäureabsorbtion, aufgegeben werden kann.

Nach Verlassen der ersten Waschstufe, in der der überwiegende Anteil von 50 - 99,5 % der Salpetersäure und das Ammonnitrat bis zu 99,5 % ausgewaschen wurden, wird die erste Salpetersäure in der zweiten Waschstufe 8 durch chemische Bindung entfernt. Hierzu wird in der Ansetzstation 10 eine alkalische Lösung erzeugt, und zwar dadurch, dan Alkali über die Leitung 14 mit sauberem Prozeßwasser über die Leitung gemischt wird und als alkalische Waschlösung über die Leitung 16 im Gegenstrom der zweiten Waschstufe 8 aufgegeben wird. Evtl. unlösliche Inertstoffe werden aus der Ansetzstation 10 über die Leitung 17 ausgetragen.

Ähnlich wie die erste Waschstufe 7 kann auch die Behandlung in der zweiten Stufe 8 über Austauschböden oder mit Füllkörpern vorgenommen werden. Eine mögliche Umwälzung und damit eine entsprechende höhere Flüssigkeitsbelastung dieser Stufe ist durch die Leitung 18 angedeutet. Die Steuerung kann dabei so getroffen werden, daß die alkalische Waschstufe übersprungen wird, wenn Druck und Temperatur in der Waschkolonne die gewünschte Reinheit des Kondensates ermöglichen, d.h. 5 bis 50 ppm N, d.h. wenn diese Werte allein durch Waschung mit sauberem Kondensat (Leitung 19) aus dem Kondensator 5 erreichbar ist.

Die dritte Waschstufe 9 ist schließlich auch als Fangstufe für mitgerissene kleine Flüssigkeitströpfchen aus der zweiten Waschstufe 8 eingerichtet, sie wird, wie bereits erwähnt, mit sauberem Kondensat über die Leitung 19 betrieben, auch hier können mehrere Austauschböden vorgesehen sein.

Die Kondensationseinheit 5 kann in unterschiedlicher Weise gestaltet sein, z.B. als Heizkammer einer Eindampfung, als Vorwärmer oder als ein sonstiger Wärmetauscher. Es sei bemerkt, daß in der ersten Waschstufe 7, wenn es die Wärmebilanz der Waschkolonne erlauben sollte, auch andere Prozeß kondensate aus Prozeßstufen von der $NH_4NO_3$-Herstellung, z.B. bei Eindampfung, eingeleitet werden können, auch die verunreinigten Brüden, die die Anlage 1 über die Leitung 12 erreichen, können selbstverständlich auch aus mehreren Prozeßstufen stammen.

Nachfolgend sind drei Beispiele der Erfindung wiedergegeben:

Beispiel 1

Behandlung der Brüden mit dem eigenen sauberen Kondensat und NaOH (Natronlauge).

Angenommen, der Brüden enthält 1 gr $HNO_3$/l entsprechend 20 kg $HNO_3$/h bei 20.000 t Brüden/h. Bei vollkommenem Umsatz entstehen ca. 27 kg/h an $NaNO_3$. Bezogen auf die produzierte AN-Schmelze enthält diese ca. 0,07 % $NaNO_3$ bzw. 0,02 % Na. Chilesalpeter enthält etwa 25 % Na.

Beispiel 2

Behandlung der Brüden mit dem eigenen sauberen Kondensat und KOH (Kaliumlauge).

Für die gleichen o.g. Voraussetzungen entstehen 32 kg/h an $KNO_3$ entsprechend ca. 0,077 %.

Diese Menge an Kalium in Ammonnitrat enthält kein Chlorid.

Beispiel 3

Behandlung der Brüden mit dem eigenen sauberen Kondensat und MgO (MgO-Suspension).

Für die gleichen o.g. Voraussetzungen entstehen 23,5 kg/h an $Mg(NO_3)_2$ entsprechend 0,06 %.

Beispiel 4

Fall a):

In eine Waschkolonne tritt Brüden ein mit einer Menge von 23.000 kg/h. Er enthält 3,5 gr $HNO_3$/l Kondensat und ca. 1 gr $NH_4NO_3$/l

Durch die "Erste Waschstufe" wird der Gehalt an Verunreinigungen im Brüden reduziert auf 2 gr $HNO_3$/l und 8 mg $NH_4NO_3$/l

Die ausgewaschenen Verunreinigungen werden mit 7.300 kg/h Brüdenkondensat ausgetragen.

Das Kopfprodukt kann nicht abgestoßen werden, da der Gehalt an Verunreinigungen zu hoch ist.

Fall b):

In der gleichen Waschkolonne wird die 3. Stufe, d.h. die Fangzone, zugeschaltet. Die Qualität des Kopfproduktes verbessert sich auf 200 mg $HNO_3$/l und 4 mg AN/l. Der pH-Wert liegt bei ca. 2.

Fall c):

Zwischen die beiden o.g. Waschstufen wird die alkalische Waschstufe zwischengeschaltet. Die Qualität des Kopfproduktes steigt auf 4-8 mg $NO_3$/l und 1-2 mg $NH_3$/l. Der pH-Wert steigt auf größer 5.

## Ansprüche

1. Verfahren zur Entfernung von Ammonnitrat und/oder Salpetersäure aus Brüden einer Ammonnitratanlage,
dadurch gekennzeichnet,
daß die Reinigung der sauren Brüden mehrstufig erfolgt mit wenigstens einer Wasserwaschstufe und einer nachfolgenden Behandlungsstufe zur chemischen Bindung von Salpetersäure.

2. Verfahren nach Anspruch 1,
dadurch gekennzeichnet,
daß in der ersten Waschstufe als Waschflüssigkeit sauberes Prozeßwasser und in der zweiten Stufe zur chemischen Bindung pflanzenverträgliches Alkali wie NaOH, KOH, MgO, oder CaO eingesetzt wird.

3. Verfahren nach Anspruch 1 oder 2,
dadurch gekennzeichnet,
daß der chemischen Behandlungsstufe eine weitere Waschstufe mit sauberem Prozeßwasser nachgeschaltet ist.

4. Verfahren nach einem der vorangehenden Ansprüche,
dadurch gekennzeichnet,
daß die abgezogene Waschflüssigkeit der dritten Stufe der ersten Stufe als Waschflüssigkeit aufgegeben wird.

5. Verfahren nach einem der vorangehenden Ansprüche,
dadurch gekennzeichnet,
daß zur Erzeugung der alkalischen Lösung zum Einsatz in der zweiten Stufe eine mit sauberem Prozeßwasser beaufschlagte Ansetzstation eingesetzt wird.

6. Verfahren nach einem der vorangehenden Ansprüche,
dadurch gekennzeichnet,
daß aus der Ansetzstation unlösliche Inertstoffe abgefiltert werden.

7. Anlage zur Behandlung von mit Ammonnitrat und Salpetersäure belasteten Brüden aus einer AN-Anlage,
gekennzeichnet durch
eine Waschstufe (7) zum Waschen der Brüden mit reinem Prozeßwasser, einer nachfolgenden Behandlungsstufe (8) mit einer alkalischen Lösung sowie einer nachgeschalteten Fang-bzw. Waschstufe (9) zur Entfernung, insbesondere kleinerer Flüssigkeitstropfen aus den Brüden.

8. Anlage nach Anspruch 7,
dadurch gekennzeichnet,
daß der dritten Stufe (9) eine Kondensationseinheit (5) nachgeschaltet ist.

9. Anlage nach den Ansprüchen 7 und 8,
dadurch gekennzeichnet,
daß eine Ansetzstation (10) zur Erzeugung einer alkalischen Lösung aus aufgegebenen Alkalis und sauberem Prozeßwasser vorgesehen ist.

1
2
3
4
5
6
7
8
9
10
11
12
13
14
15
16
17
18
19
14

Europäisches Patentamt

# EUROPÄISCHER RECHERCHENBERICHT

Nummer der Anmeldung

EP 88 10 0277

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 985 523 (KAUPAS)<br>* Figur 1; Spalte 7, Zeilen 13-65 * | 1,4,7,8 | C 01 C 1/18 |
| A | FR-A-2 087 565 (COMMISSARIAT A L'ENERGIE ATOMIQUE) | | |
| A | US-A-2 034 864 (HANDFORTH) | | |
| A | US-A-3 157 466 (RUTH) | | |

RECHERCHIERTE SACHGEBIETE (Int. Cl.4)

C 01 C
C 05 C
B 01 D

Der vorliegende Recherchenbericht wurde für alle Patentansprüche erstellt

| Recherchenort | Abschlußdatum der Recherche | Prüfer |
|---|---|---|
| DEN HAAG | 29-04-1988 | ZALM W.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)